# EUROPÄISCHE PATENTANMELDUNG

(11) **EP 1 322 063 A2**
(43) Veröffentlichungstag der Anmeldung: **25.06.2003**
(21) Anmeldenummer: 02027975.8
(22) Anmeldetag: 13.12.2002
(51) Int. Cl.: H04L 12/14, H04M 15/00, H04M 17/00

(54) **Anordnung und Verfahren zur Gebührenabbuchung**

(30) Priorität: 19.12.2001 DE 10162554
(71) Anmelder: SIEMENS AKTIENGESELLSCHAFT, 80333 München (DE)
(72) Erfinder: Gabrysch, Mathias, Dr., 80469 München (DE); Kasprzyk, Peter, 81476 München (DE)

(57) **Zusammenfassung**

Es wird eine Anordnung zur Gebührenabbuchung in einem Daten- bzw. Telekommunikationsnetz offenbart, die ein Endgerät (11), einen Netzserver (12) und einen Abrechungsserver (14) aufweist, der Gebührentickets für Verbindungen bei Benutzung des Endgerätes (11) ohne ein vorheriges Prepaid-Signal erstellt und in einem Ticketspeicher (15) abspeichert. Ferner weist die Anordnung ein IN-System (16) und eine Software (17) auf, die derart ausgebildet ist, daß sie bei Benutzung des Endgerätes (11) nach einem vorherigen Prepaid-Signal die Gebühren von einem im Kontospeicher (18) gespeicherten elektronischen Guthaben abbucht.

## Beschreibung

### Anordnung und Verfahren zur Gebührenabbuchung

Die Erfindung betrifft eine Anordnung sowie ein entsprechendes Verfahren zur Gebührenabbuchung in einem Daten- bzw. Telekommunikationsnetz.

Neben dem Internet stellt die Telekommunikation - insbesondere die mobile Telekommunikation - heute ein Gebiet mit rasanter technischer und wirtschaftlicher Entwicklung und eine wesentliche Quelle wirtschaftlichen Wachstums und neuer sozialer Entwicklungen dar. Für einen Großteil der Menschen in den Industrieländern wird das Mobiltelefon ("Handy") mehr und mehr zu einem universellen Kommunikations- und Informationsinstrument und auch zunehmend für den Zugriff auf Waren und Dienstleistungen genutzt.

Obwohl die Handys ursprünglich in erster Linie im geschäftlichen Bereich genutzt wurden, hat sich in der jüngeren Vergangenheit zunehmend ein großer Markt für die private Nutzung der mobilen Telefonie entwickelt. Immer mehr Teilnehmer der mobilen Telefonie nutzen privat neben einem Festnetzanschluß zusätzlich einen Mobilfunk-Netzanschluß.

Mobilfunkteilnehmer mit einem Firmenhandy können allerdings keine privaten Telefonate auf eigene Rechnung führen, da jedes Gespräch automatisch der Firma in Rechnung gestellt wird, die eigentlicher Kunde des Mobilfunkbetreibers ist. Diese Mobilfunkteilnehmer könnten zwar ihre privat geführten Gespräche der Firma melden, nachdem die Firma die Rechnung erhalten hat. Der Rechnungsanteil der die privat geführten Gespräche betrifft, könnte dann dem Firmenmitarbeiter bzw. Mobilfunkteilnehmer von seinen Bezügen abgezogen werden. Dies ist jedoch für Firmen, insbesondere für größere Firmen, mit einem erheblichen verwaltungstechnischen Aufwand verbunden. Dieser Aufwand verursacht durch die gebundenen Ressourcen unter Umständen mehr Kosten, als dadurch gespart würden, daß der Mitarbeiter seine privat geführten Gespräche selber bezahlt.

Als Alternative hierzu könnte der Mobilfunkteilnehmer, um nicht seine privat geführten Gespräche auf Firmenkosten führen zu müssen, sich zusätzlich ein weiteres, privates Handy besorgen. Dieses Vorgehen führt allerdings zu einer besonders nachteiligen Lösung. Denn der Mobilfunkteilnehmer muß, um erreichbar zu sein, stets zwei verschiedene Handys mit sich führen.

Der Erfindung liegt daher die Aufgabe zugrunde, eine verbesserte Mobilfunkanordnung sowie ein verbessertes Verfahren zur Gebührenabbuchung anzugeben, mit denen es einem Mobilfunkteilnehmer ermöglicht wird, ein und dasselbe Handy sowohl dienstlich als auch privat zu nutzen, also z. B. Gespräche zu führen, die entsprechend ihres dienstlichen bzw. privaten Charakters unterschiedlich verrechnet werden.

Diese Aufgabe wird in ihrem Anordnungsaspekt durch eine Anordnung mit den Merkmalen des Anspruchs 1 und in ihrem Verfahrensaspekt durch ein Verfahren mit den Merkmalen des Anspruchs 5 gelöst.

Die Erfindung schließt den grundlegenden Gedanken ein, daß bei jedem Handy, das an ein Mobilfunknetz angeschlossen ist, zwei unterschiedliche Gebührenabrechnungsverfahren angewendet werden können. Bei einem dieser beiden Verfahren, werden die anfallenden Gebühren nach der Verbindung mittels Gebührentikkets festgehalten. Diese Tickets werden gesammelt und am Ende einer Abrechnungsperiode als ganzes dem Handynutzer in Rechnung gestellt, und die Bezahlung wird bankmäßig abgewickelt. Bei dem zweiten Verfahren werden die Verbindungsgebühren von einem abgespeicherten elektronischen Guthaben in dem Fall abgezogen, wenn beim Rufaufbau ein definiertes Signal von dem Handy an einen Server des Mobilfunknetzbetreibers gesendet wurde. Die Erstellung der Tickets übernimmt ein Netzserver des Mobilfunkbetreibers, und die Verwaltung der Tickets wird durch einen Abrechnungsserver gesteuert, der zentral im Netz angeordnet ist. Die Steuerung der Abrechnung und Verwaltung des Guthabenkontos übernimmt eine im Netz des Mobilfinkbetreibers implementierte Software.

Vorteilhaft ist, daß das Guthaben, das im Kontospeicher gespeichert ist und von dem anschließend an ein vorheriges Signal abgebucht wird, ein Prepaid-Guthaben ist. Diese Art von Bezahlung basiert darauf, daß der Kunde ein bestimmtes Guthaben im voraus dem Mobilfunknetzbetreiber bezahlt. Anschließend kann der Kunde solange Dienstleistungen des Betreibers in Anspruch nehmen, bis sein vorausbezahltes Guthaben "aufgebraucht" ist. Diese Art der Bezahlung ist insbesondere deshalb attraktiv, weil keine nutzungsunabhängige Grundgebühr anfällt. Ferner ermöglicht dies dem Nutzer eine gute Kostenkontrolle und zwingt dem Kunden keine zusätzliche Vertragsbindung auf.

Vorteilhafte Aspekte des erfindungsgemäßen Verfahren ergeben sich entsprechend der vorstehenden Beschreibung der vorteilhaften Aspekte der erfindungsgemäßen Anordnung.

Ein besonderer Vorteil ergibt sich für das erfindungsgemäße Verfahren, wenn für ein und dasselbe Handy Prepaid- und "Postpaid"-Zahlungen möglich sind. Dies ermöglicht insbesondere bei Firmenhandys, daß die Firma als Kunde des Mobilfunkbetreibers die Verbindungsentgelte für dienstlichen Gebrauch am Ende einer Abrechnungsperiode entrichtet. Gleichzeitig hat der Mobilfunkteilnehmer bzw. der Mitarbeiter mit Firmenhandy die Möglichkeit, mit einem Prepaid-Konto für seinen privaten Gebrauch die Kosten zu übernehmen und zu kontrollieren. Es entfällt zusätzlich dabei der verwaltungstechnische Aufwand, nachträglich aus einer Gesamtrechnung den Rechnungsanteil für den privaten Gebrauch zu ermitteln.

In vorteilhafter Weise wird das Signal bzw. die Kennzeichnung des Nutzungscharakters, als dienstlich oder privat, durch eine vordefinierte Ziffern- bzw. Tastenfolge generiert, die der Rufnummer der gewünschten Verbindung vorangestellt. Als Alternative hierzu kann auch vorteilhaft als Signal ein Sendesignal aufgrund einer Betätigung einer bestimmten Taste oder Auswahl eines bestimmten Menüpunktes verwendet werden. Aufgrund des gesendeten Signals, ob durch eine Vorwahl oder einer bestimmten Taste, kann eindeutig zwischen zwei unterschiedlichen Charakteristika einer Verbindung, ob beispielsweise ein dienstliches oder privates Gespräch geführt wird, unterschieden werden.

Vorzugsweise können für Verbindungen die Verbindungsentgelte pro Abrechnungs- bzw. Zeittakt, die von den beiden unterschiedlichen Konten abgebucht werden, auch unterschiedlichen Beträgen entsprechen, da der Mobilfunknetzbetreiber für das zusätzliche Zahlungsverfahren weitere Ressourcen bereit stellen muß. Weiterhin kann er durch diese flexiblere Tarifierungsmöglichkeit berücksichtigen, daß die von ihm zusätzlich angebotene Dienstleistung im Bereich der privat geführten Gespräche nur gelegentlich in Anspruch genommen wird, im Gegensatz zu den Gesprächen mit dienstlichen Charakter.

Vorteile und Zweckmäßigkeiten der Erfindung ergeben sich im übrigen aus den Unteransprüchen sowie der nachfolgenden Beschreibung eines bevorzugten Ausführungsbeispiels anhand der Figuren. Von diesen zeigen:
Fig. 1 eine stark vereinfachte, schematische Darstellung einer Ausführungsform der erfindungsgemäßen Anordnung und
Fig. 2 ein stark vereinfachtes Blockdiagramm des erfindungsgemäßen Verfahrens.

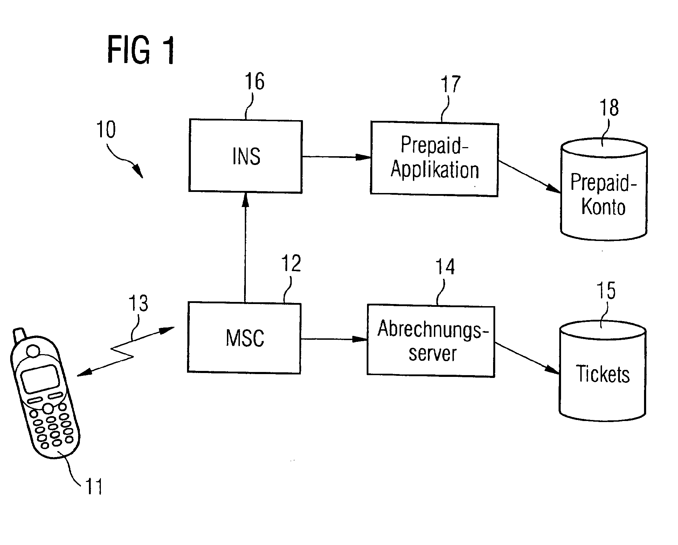

In Fig. 1 ist eine erfindungsgemäße Anordnung 10 zur Gebührenabbuchung in einem Mobilfunknetz mit einem Handy 11 vereinfacht dargestellt. In dem Beispiel ist Kunde des Mobilfunknetzbetreibers eine Firma, die das Handy einem Mitarbeiter für den dienstlichen Gebrauch zur Verfügung stellt.

Die Datenfernübertragung zwischen dem Handy 11 und einem Netzserver bzw. MSC 12 des Mobilfunknetzbetreibers ist mit einem gezackten Pfeil 13 angedeutet. Der Netzserver 12 überprüft, ob die gewünschte Verbindung über das Postpaid-Abrechnungsverfahren oder das Prepaid-Abrechnungsverfahren verrechnet werden soll.

Im Fall einer Postpaid-Abrechnung stellt der Netzserver 12 die gewünschte Rufverbindung her. Anschließend an das Gespräch erstellt der Server 12 ein Gebührenticket für das aktuell beendete Gespräch. Dieses Ticket sendet er an den zentral im Mobilfunknetz angeordneten Abrechungsserver 14. Dieser sammelt im Ticketspeicher 15 die Tickets, die am Ende einer Abrechnungsperiode, beispielsweise am Ende eines Monats, dem Kunden gesammtelt in Rechnung gestellt werden.

Im Fall einer Prepaid-Abrechnung stellt der Netzserver den Verbindungswunsch an ein IN-System (Intelligent-Network-System) 16 durch. Dieses System 16 überprüft anhand der Tarifstruktur, die auf das Verbindungsziel und die Tageszeit basieren, ob das Prepaid-Konto noch einen Kontostand aufweist, der eine sinnvolle Verbindungszeit mit dem gewünschten Ziel ermöglicht. Ist dies nicht möglich, weil das Prepaid-Guthaben ganz oder annähernd aufgebraucht ist, wird der Verbindungswunsch abgewiesen.

Reicht das vorhandene Prepaid-Guthaben vernüftigerweise für eine entsprechende Verbindung aus, wird die Verbindung erstellt. Die Abrechnung der Verbindungsgebühren erfolgt dabei über eine Prepaidapplikation 17, die die anfallenden Gebühren direkt von einem Konto im Speicher 18 abbucht. Dieses im Kontospeicher 16 gespeicherte Konto ist ein Prepaid-Konto, auf das der Mitarbeiter ein Guthaben im voraus einbezahlt. Der Mobilfunkteilnehmer kann nur solange Dienstleistungen des Netzbetreibers zu Lasten dieses Kontos in Anspruch nehmen, wie das vorausbezahlte Guthaben positiv ist.

Auch wenn in der Darstellung der Figur 1 lediglich ein Handy 11 gezeigt wird, ist es offensichtlich, daß der Netzserver 12 des Mobilfunknetzbetreibers mit einer beliebig großen Anzahl von unterschiedlichen Handys des gleichen oder von unterschiedlichen Kunden in Verbindung treten kann.

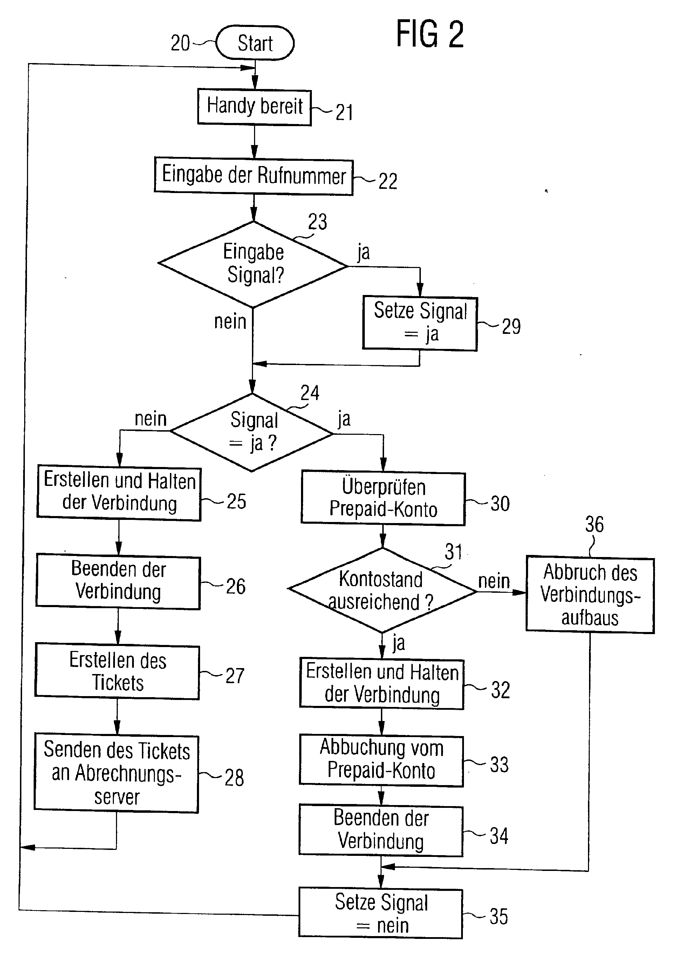

In Fig. 2 ist beispielhaft eine Ausführungsform des erfindungsgemäßen Verfahrens zur Gebührenverrechnung schematisch dargestellt. Im folgenden wird das dargestellte Flußdiagramm anhand zweier zu unterscheidender Situationen ausführlich beschrieben.

In der ersten Situation wählt der Mobilfunkteilnehmer eine Rufnummer für ein Gespräch mit dienstlichem Charakter. Der Verfahrensablauf in der Darstellung beginnt bei der Box 20, wobei unter "Start" beispielsweise das Einschalten des Handys oder das Einloggen des Handys in ein bestimmtes Mobilfunknetz verstanden werden kann.

In der Box 21 befindet sich das Handy in einem Bereitschaftszustand, aus dem eine Verbindung aufgebaut werden kann. In der Box 22 gibt der Mobilfunkteilnehmer die gewünschte Verbindungsrufnummer in der üblichen Weise ein.

In der Entscheidungsbox 23 wird überprüft, ob der Mobilfunkteilnehmer der gewünschten Verbindungsrufnummer eine Vorwahl bzw. eine bestimmte Ziffernfolge als Signalkennzeichen vorangestellt hat. In diesem Beispiel ist keine Vorwahl voran gestellt. Die Box 23 wird deshalb über den "Nein"-Pfad verlassen.

Der Verfahrensablauf wird anschließend in der Entscheidungsbox 24 fortgesetzt. Hier wird überprüft ob eine Signalflagge auf ja gesetzt wurde, was in diesem Beispiel nicht der Fall ist. Die Box 24 wird ebenfalls über den "Nein"-Pfad verlassen und der Verfahrensablauf wird in der Box 25 fortgesetzt.

In der Box 25 wird die gewünschte Verbindung aufgebaut bzw. erstellt und gehalten. Anschließend wird in der Box 26 die Verbindung bzw. das Gespräch beendet. In der Box 27 wird entsprechend den Gebühren für diese Verbindung ein Gebührentikket erstellt. Dieses Ticket wird in der Box an den Abrechnungsserver, der zentral im Mobilfunknetz angeordnet ist, gesendet. Dort werden alle Tickets gesammelt und am Ende eines Abrechnungszeitraumes dem Kunden in Rechnung gestellt. In dem Beispiel führt der Mobilfunkteilnehmer ein dienstliches Gespräch, so daß die Gebühren der Firma in Rechnung gestellt werden, über ein sogenanntes Postpaid-Abrechnungsverfahren. Nach dem Senden des Tickets in der Box 28 kehrt das Handy zurück in den Bereitschaftszustand der Box 21.

In der zweiten Situation wählt der Mobilfunkteilnehmer eine Rufnummer für ein Privat-Gespräch. Der Verfahrensablauf in dieser Situation weicht von dem vorstehend beschriebenen Ablauf ab. In der Box 21 befindet sich das Handy - noch wie in der ersten Situation - in einem Bereitschaftszustand, aus dem eine Verbindung aufgebaut werden kann.

In der Box 22 gibt der Mobilfunkteilnehmer die gewünschte Verbindungsrufnummer ein. Allerdings stellt er der Rufnummer eine Vorwahl voran, die dem Netzserver signalisiert, daß er diese Verbindung von dem zweiten Konto abgebucht haben möchte. Alternativ kann das Handy mit einer Signaltaste ausgebildet sein, so daß der Mobilfunkteilnehmer lediglich eine Taste mehr als üblich betätigen muß und keine längere Ziffernfolge.

In der Entscheidungsbox 23 wird ebenfalls wie in der ersten Situation überprüft, ob der Mobilfunkteilnehmer der gewünschten Verbindungsrufnummer eine Vorwahl bzw. eine bestimmte Ziffernfolge als Signalkennzeichen vorangestellt hat. Da er diesmal eine entsprechende Vorwahl voran stellt, wird die Box 23 wird über den "Ja"-Pfad verlassen. Und in der Box 29 wird nun die Signalflagge auf "Ja" gesetzt.

Der Verfahrensablauf wird anschließend in der Entscheidungsbox 24 fortgesetzt. Hier wird überprüft ob eine Signalflagge auf "Ja" gesetzt wurde, was in diesem Beispiel der Fall ist. Die Box 24 wird daher über den "Ja"-Pfad verlassen und in der Box 30 wird der Verfahrensablauf fortgesetzt.

In der Box 30 wird durch ein IN-System (Intelligent-Network-System) der Kontozustand des Prepaid-Kontos des Kunden anhand der Kontodaten und der gewünschten Verbindung bezüglich entfernungs- und zeitspezifischer Tarife überprüft. In der Entscheidungsbox 31 führt diese Überprüfung zu einem positiven Ergebnis, wodurch der Ablauf in der Box 32 fortgesetz wird, oder zu einem negativen Ergebnis, was zur Fortsetzung des Ablaufs mit der Box 36 führt.

Im positiven Falle wird anschließend in der Box 32 die Verbindung hergestellt und gehalten. Gleichzeitig werden die anfallenden Gebühren für diese Verbindung allerdings von einem Prepaid-Konto abgebucht, wie es in der Box 33 angedeutet ist. Von diesem Prepaid-Konto werden private Gespräche des Mobilfunkteilnehmers abgebucht.

Nach dem Beenden der Verbindung in der Box 34 wird in der Box 35 die Signalflagge zurück auf "Nein" gesetzt. Anschließend kehrt das Handy erneut in den Bereitschaftszustand der Box 21 zurück.

Fällt das Prüfeergebnis in der Box 31 negativ aus, wird in der Box 36 der Verbindungsaufbau abgelehnt und abgebrochen. Nach dem Abbruch des Verbindungsaufbaus in der Box 36 wird in der Box 35 die Signalflagge zurück auf "Nein" gesetzt. Anschließend kehrt das Handy ebenfalls in den Bereitschaftszustand der Box 21 zurück.

Neben dem unmittelbaren Vorteil für den Mobilfunkteilnehmer, der durch die erfindungsgemäße Anordnung und das erfindungsgemäße Verfahren ein Firmenhandy auch für private Verbindungen nutzen kann, profitiert der Mobilfunkbetreiber von einer größeren Auslastung seines Netzes. Zusätzlich kann er sich durch diese zusätzliche Dienstleistung von anderen, mit ihm konkurrierenden, Mobilfunkbetreibern unterscheiden.

Ferner kann die Firma, die Firmenkunde des Mobilfunkbetreibers ist und ihren Mitarbeitern ein entsprechendes Handy zur Verfügung stellt, Verbindungskosten einsparen, denn mit dem Handy geführte Privatgespräche gehen direkt zu Lasten des jeweiligen Mitarbeiters ohne zusätzliche Firmenressourcen, beispielsweise Buchhaltung, Controlling-Instanzen, zu binden.

Weiterhin kann der Mobilfunkteilnehmer das im voraus bezahlte Guthaben auf dem Prepaid-Konto nicht nur für unmittelbare Dienstleistungen des Mobilfunknetzbetreibers, beispielsweise mobile Telefonie und Kurznachrichten (SMS) verwenden. Er kann mit dem Prepaid-Konto beispielsweise auch andere Zahlungsvorgänge des täglichen Lebens, Waren oder Dienstleistungen anderer Anbieter, bargeldlos begleichen.

Die Ausführung der Erfindung ist nicht auf die erwähnten Beispiele, Varianten und Aspekte beschränkt, sondern im Rahmen der Ansprüche ebenso in einer Vielzahl von Abwandlungen möglich, die im Rahmen fachgemäßen Handelns liegen. Insbesondere sind die oben beschriebenen Verfahrensschritte auch in anderer Reihenfolge möglich.

## Patentansprüche

1. Anordnung (10) zur Gebührenabbuchung in einem Daten- bzw. Telekommunikationsnetz, welche aufweist:
ein Endgerät (11),
einen Netzserver (12), mit dem das Endgerät (11) kommuniziert,
einen Abrechnungsserver (14), der von aufgrund einer Benutzung des Endgerätes (11) ohne ein vom Endgerät (11) ausgehendes Prepaid-Signal anfallende Gebührentickets erstellt,
einen Ticketspeicher (15) zur Speicherung der Gebührentikkets,
einen Kontospeicher (18) zur Speicherung eines elektronischen Guthabens,
ein Intelligent-Network-System (16), zur Überprüfung, ob das im Kontospeicher (18) abgespeicherte Guthaben eine sinnvolle Verbindungzeit ermöglicht, und
eine Software (17), die derart ausgebildet ist, daß sie bei einer Verbindung des Endgerätes (11) mit einem vom Endgerät (11) ausgehenden Prepaid-Signal die Gebühren von dem im Kontospeicher (18) gespeicherten elektronischen Guthaben abbucht.

2. Anordnung nach Anspruch 1,
**dadurch gekennzeichnet, daß**
das Daten- bzw. Telekommunikationsnetz ein Mobilfunknetz umfaßt und das Endgerät (11) ein an das Mobilfunknetz angeschlossenes Mobilfunk-Endgerät ist.

3. Anordnung nach einem der vorstehenden Ansprüche,
**dadurch gekennzeichnet, daß**
das im Kontospeicher (18) gespeicherte Guthaben ein Prepaid-Guthaben ist.

4. Elektronisches Zahlungsverfahren zur Gebührenverrechnung von Verbindungsentgelten eines Endgerätes (11) in einem Daten- bzw. Telekommunikationsnetz, wobei für die Gebühren bei Benutzung des Endgerätes (11) ohne ein vom Endgerät ausgehendes Prepaid-Signal mittels Tickets, die während der Dauer einer Abrechnungsperiode gesammelt werden, elektronisch zu einem Gesamtbetrag aufsummiert werden und die Gebühren bei Benutzung des Endgerätes (11) unter Erzeugung des Prepaid-Signals von einem elektronischen Guthaben direkt während einer Verbindung abgebucht werden.

5. Verfahren nach Anspruch 4,
**dadurch gekennzeichnet, daß**
bei Eingabe einer vordefinierte Ziffern- bzw. Tastenfolge, die der gewünschten Rufnummer vorangestellt wird, das Prepaid-Signal generiert wird.

6. Verfahren nach Anspruch 4,
**dadurch gekennzeichnet, daß**
das Prepaid-Signal ein Sendesignal bei Betätigung einer bestimmten Taste eines bestimmten Menüpunktes des Endgerätes (11) ist.

7. Verfahren nach einem der Ansprüche 4 bis 6,
**dadurch gekennzeichnet, daß**
die Verbindungsentgelte für die Benutzung des Daten- bzw. Telekommunikationsnetzwerkes pro Abrechnungs- bzw. Zeittakt in Abhängigkeit von der Erzeugung des Prepaid-Signals unterschiedlich sind.
